(19) Europäisches Patentamt
European Patent Office
Office européen des brevets

(11) **EP 4 108 435 B1**

(12) **EUROPEAN PATENT SPECIFICATION**

(45) Date of publication and mention of the grant of the patent:
**01.05.2024 Bulletin 2024/18**

(21) Application number: **21181464.5**

(22) Date of filing: **24.06.2021**

(51) International Patent Classification (IPC):
***B29D 7/01*** *(2006.01)* ***B32B 7/04*** *(2019.01)*
***B32B 25/00*** *(2006.01)* ***C08F 210/16*** *(2006.01)*
***C08J 5/18*** *(2006.01)* ***C08L 23/08*** *(2006.01)*
*C08F 4/659 (2006.01)*

(52) Cooperative Patent Classification (CPC):
(C-Sets available)
**C08F 210/16; C08J 5/18;** B29D 7/01;
C08F 4/65912; C08F 4/65916; C08F 2420/07;
C08J 2323/08; C08J 2423/08; C08L 23/0815;
C08L 2314/06 (Cont.)

(54) **POLYETHYLENE COMPOSITION WITH IMPROVED PROCESSABILITY**

POLYETHYLENZUSAMMENSETZUNG MIT VERBESSERTER VERARBEITBARKEIT

COMPOSITION DE POLYÉTHYLÈNE PRÉSENTANT UNE MEILLEURE APTITUDE AU TRAITEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.12.2022 Bulletin 2022/52**

(73) Proprietor: **Borealis AG**
**1020 Vienna (AT)**

(72) Inventors:
- **WANG, Jingbo**
  **4021 Linz (AT)**
- **BERGER, Friedrich**
  **4021 Linz (AT)**
- **AHO, Jani**
  **06101 Porvoo (FI)**

(74) Representative: **TBK**
**Bavariaring 4-6**
**80336 München (DE)**

(56) References cited:
**WO-A1-2016/083208** **WO-A1-2020/109563**
**US-A1- 2014 194 277**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/001;**
**C08F 210/16, C08F 4/6492;**
**C08F 210/16, C08F 4/65927;**
C08F 210/16, C08F 210/08, C08F 2500/12, C08F 2500/27;
C08F 210/16, C08F 210/14, C08F 210/08, C08F 2500/12, C08F 2500/27, C08F 2500/26, C08F 2500/31, C08F 2500/05, C08F 2500/30;
C08F 210/16, C08F 210/14, C08F 2500/12, C08F 2500/27, C08F 2500/08;
C08L 23/0815, C08L 23/0815, C08L 23/0815

## Description

The present invention relates to a metallocene-catalysed multimodal polyethylene copolymer (P) which has improved processability, to the use of the multimodal polyethylene copolymer (P) in film applications and to a film comprising the polymer composition of the invention.

Unimodal polyethylene (PE) polymers, for instance SSC products, are usually used for film applications. Unimodal PE polymers have for instance good optical properties, like low haze, but for instance, the melt processing of such polymers is not satisfactory in production point of view and may cause quality problems of the final product as well. Multimodal PE polymers with two or more different polymer components are better to process, but e.g. melt homogenisation of the multimodal PE may be problematic resulting in inhomogeneous final product evidenced e.g. by high gel content of the final product.

State of the art mLLDPE (metallocene catalysed linear low density polyethylene) is widely used everywhere in daily life, like packaging, due to its excellent cost / performance ratios. One of the famous drawback is the narrow molecular weight distribution and therefore less shear thinning, which leads to the problem in film conversion, e.g. limiting the throughput. WO 2016/083208 A1 relates to a polymer composition, to the use of the polymer composition in film applications and to a film comprising the polymer composition. WO 2020/109563 A1 relates to a process to produce a polymer, a corresponding polymer and an article comprising a polymer made by the process. US 2014/194277 A1 relates to a polyethylene-based resin composition which comprises from 41 to 99 wt % of (A) an ethylene-based polymer satisfying specific conditions and from 1 to 59 wt % of (B) an ethylene-based polymer satisfying specific conditions, wherein MFR of the composition as a whole is from 0.05 to 50 g/10 min and the density is from 0.910 to 0.960 g/cm$^3$.

It is desirable to increase output in film production, since increased output is economically beneficial as more product can be produced per unit time and is furthermore advantageous in view of the $CO_2$ footprint, whereby any increases in output must be achieved without detriment the properties of the polymer.

By increasing the melt flow rate ($MFR_2$) of a polymer resin, melt temperature and melt pressure during film blowing can be decreased. This is expected to increase the output of a blown film process. On the other hand, an increased MFR typically has a negative effect on bubble stability, and therefore in order to have good bubble stability during blown film processes, film resins with low $MFR_2$ are preferred. Lower $MFR_2$-values are also advantageous in view of toughness.

There is therefore a tradeoff between higher MFR and increased output and poor processability through poor bubble stability.

The present inventors therefore sought to maximise the processability of mLLDPE resins, which enable higher throughput, especially in blown film processes, while maintaining bubble robustness and stability. It goes without saying that any manipulation of the polymer properties to enable improved throughput should not be detrimental to the final film properties, e.g. in terms of mechanical strength, optical properties, sealing properties and the like.

The inventors have now found, that a metallocene-catalysed multimodal polyethylene copolymer (P) made with a specific metallocene catalyst and having a specific polymer design has an improved processability, which can be seen, inter alia, in terms of higher possible take off speed.

Such a metallocene-catalysed multimodal polyethylene copolymer (P) has an improved rheological behavior, especially in terms of shear thinning index.

The films made from such a metallocene-catalysed multimodal polyethylene copolymer (P) have in addition an improved balance of properties, especially in view of lower sealing initiation temperature (SIT), higher stiffness (i.e. tensile modulus) and good impact strength (i.e. dart drop impact, DDI).

## Description of the invention

The present invention is therefore directed to a metallocene-catalysed multimodal polyethylene copolymer (P) of ethylene with at least two different comonomers selected from alpha-olefins having from 4 to 10 carbon atoms, which consists of

(i) 30.0 to 70.0 wt% of an ethylene polymer component (A) with a comonomer selected from alpha-olefins having from 4 to 10 carbon atoms, and

(ii) 70.0 to 30.0 wt% of an ethylene polymer component (B) with a comonomer selected from alpha-olefins having from 4 to 10 carbon atoms, wherein the alpha-olefin comonomer having from 4 to 10 carbon atoms of ethylene polymer component (A) is different from the alpha-olefin comonomer having from 4 to 10 carbon atoms of ethylene polymer component (B),

whereby the ethylene polymer component (A) has
a density in the range of from 920 to 950 kg/m$^3$ and an $MFR_2$ (190°C, 2.16 kg, ISO 1133) in the range of from 1.0

to 20.0 g/10 min; and
the ethylene polymer component (B) has
a density in the range of from 890 to 915 kg/$m^3$ and an $MFR_2$ (190°C, 2.16 kg, ISO 1133) in the range of from 0.01 to 1.5 g/10 min; and
whereby the multimodal polyethylene copolymer (P) has

a) a density in the range of from 910 to 940 kg/$m^3$,
b) an $MFR_2$ (190°C, 2.16 kg, ISO 1133) in the range of from 0.1 to 10.0 g/10 min,
c) a ratio of the $MFR_{21}$ (190°C, 21.6 kg, ISO 1133) to $MFR_2$ (190°C, 2.16 kg, ISO 1133), $MFR_{21}/MFR_2$, in the range of from greater than 20 to 50,
d) a rheological polydispersity index defined as $10^5$/Gc with Gc being the crossover modulus from dynamic rheology according to ISO 6271-10 at 190°C in the range of greater than 0.57 to 2.0 $Pa^{-1}$ and
e) a shear thinning index $SHI_{0/50}$ measured as described in the experimental part in the range of greater than 1.80 to 10.0.

In one embodiment of the present invention, the ethylene polymer component (A) of the metallocene-catalysed multimodal polyethylene copolymer (P) consists of an ethylene polymer fraction (A-1) and an ethylene polymer fraction (A-2), wherein the ethylene polymer fraction (A-1) has a density in the range of from 920 to 960 kg/$m^3$ and an $MFR_2$ (190°C, 2.16 kg, ISO 1133) in the range of from 1.0 to 10.0 g/10 min, and the ethylene polymer fraction (A-2) has a density in the range of from 920 to 960 kg/$m^3$ and an $MFR_2$ and (190°C, 2.16 kg, ISO 1133) in the range of from 2.0 to 15.0 g/10 min.

In another embodiment of the present invention, the metallocene-catalysed multimodal polyethylene copolymer (P) is prepared in the presence of a metallocene of formula (I):

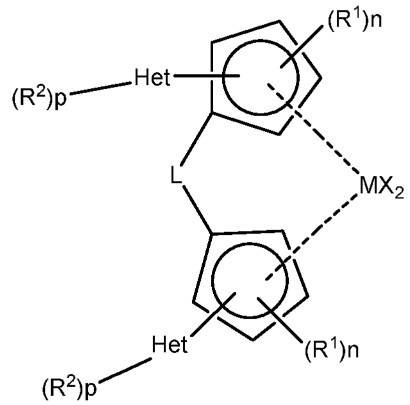

(I)

wherein each X is independently a halogen atom, a $C_{1-6}$-alkyl, $C_{1-6}$-alkoxy group, phenyl or benzyl group;
each Het is independently a monocyclic heteroaromatic group containing at least one heteroatom selected from O or S;
L is -$R'_2$Si-, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or -$Si(R)_3$ group;
each R is $C_{1-10}$-alkyl or phenyl group optionally substituted by 1 to 3 $C_{1-6}$-alkyl groups; and each p is 0 to 1.

Unexpectedly such a metallocene-catalysed multimodal polyethylene copolymer (P) shows an improved processability compared to other multimodal polyethylene copolymers with a comparable $MFR_2$ value.

This allows therefore reductions in melt pressure and temperature during film blowing to be achieved and hence an increase in output/ higher take off speed, whilst maintaining stable process conditions (i.e. a stable / robust bubble).

In addition, the multimodal polyethylene copolymer (P) of the invention provides improved sealing properties to films, such as lower sealing initiation temperature (SIT) in combination with good mechanical properties such as high dart drop strength (DDI) and good tensile modulus.

Therefore, in a further embodiment the present invention is further related to the use of the above defined

metallocene-catalysed multimodal polyethylene copolymer (P) for producing blown films and to the blown films made of such metallocene-catalysed multimodal polyethylene copolymer (P).

The invention is therefore further directed to a film comprising at least one layer comprising the metallocene-catalysed multimodal polyethylene copolymer (P).

The film is characterized by a sealing initiation temperature (SIT) measured as described in the experimental part on a 40 μm monolayer test blown film of below 97°C, preferably in the range of 60 to 96°C, more preferably in the range of 70 to 95°C.

*Definitions*

Where the term "comprising" is used in the present description and claims, it does not exclude other non-specified elements of major or minor functional importance. For the purposes of the present invention, the term "consisting of' is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Metallocene catalysed multimodal copolymer is defined in this invention as multimodal copolymer (P) of ethylene with at least two different comonomers selected from alpha-olefins having from 4 to 10 carbon atoms, which has been produced in the presence of a metallocene catalyst.

Term "multimodal" in context of multimodal polyethylene copolymer (P) means herein multimodality with respect to melt flow rate (MFR) of the ethylene polymer components (A) and (B) as well as of the optional ethylene polymer fractions (A-1) and (A-2), i.e. the ethylene polymer components (A) and (B), as well as the optional fractions (A-1) and (A-2) have different MFR values. The multimodal polyethylene copolymer (P) can have further multimodality with respect to one or more further properties between the ethylene polymer components (A) and (B) as well as between fractions (A-1) and (A-2), as will be described later below.

The multimodal polyethylene copolymer (P) of the invention as defined above, below or in claims is also referred herein shortly as "multimodal PE" or "multimodal copolymer (P)".

The term rheological polydispersity index is used herein to refer to the value of $10^5$/Gc where Gc stands for the cross-over modulus. Cross-over modulus is a rheological parameter determined as defined in the experimental part. The rheological polydispersity index is therefore measured rheological here and is not the same as Mw/Mn as determined by GPC.

The following preferable embodiments, properties and subgroups of multimodal PE and the ethylene polymer components (A) and (B) thereof, as well as the ethylene polymer fractions (A-1) and (A-2) and the film of the invention including the preferable ranges thereof, are independently generalisable so that they can be used in any order or combination to further define the preferable embodiments of the multimodal PE and the article of the invention.

**Multimodal PE as well as ethylene polymer component (A) and (B) and ethylene polymer fractions (A-1) and (A-2)**

The metallocene catalysed multimodal copolymer (P) is referred herein as "multimodal", since the ethylene polymer component (A) and ethylene polymer component (B) have been produced under different polymerization conditions resulting in different Melt Flow Rates (MFR, e.g. $MFR_2$). I.e. the multimodal PE is multimodal at least with respect to difference in MFR of the ethylene polymer components (A) and (B).

The metallocene catalysed multimodal copolymer (P) consists of

(i) 30.0 to 70.0 wt% of an ethylene polymer component (A), and
(ii) 70.0 to 30.0 wt% of an ethylene polymer component (B).

The amount of (A) and (B) add up to 100.0 wt%.

In an embodiment of the present invention, the ethylene polymer component (A) consists of an ethylene polymer fraction (A-1) and (A-2).

The $MFR_2$ of the ethylene polymer fractions (A-1) and (A-2) may be the same or may be different from each other. Preferably, the $MFR_2$ of the ethylene polymer fractions (A-1) and (A-2) are different from each other, more preferably the ethylene polymer fractions (A-2) has a higher $MFR_2$ than ethylene polymer fractions (A-1).

Thus, the ethylene polymer fractions (A-1) and (A-2) have a $MFR_2$ (190°C, 2.16 kg, ISO 1133) in the range of 0.5 to 100 g/10 min, preferably of 1.0 to 50.0 g/10 min, more preferably of 1.5 to 30.0 g/10 min, even more preferably

of 2.0 to 15.0 g/10 min, and yet more preferably of 2.5 to 10.0 g/10 min.

The $MFR_2$ of the ethylene polymer components (A) and (B) are different from each other.

The ethylene polymer component (A) has a $MFR_2$ (190°C, 2.16 kg, ISO 1133) in the range of 1.0 to 20 g/10 min, preferably of 2.0 to 15 g/10 min, more preferably of 3.0 to 10 g/10 min and even more preferably of 4.0 to 8.0 g/10 min.

The ethylene polymer component (B) has a $MFR_2$ (190°C, 2.16 kg, ISO 1133) in the range of 0.01 to 1.5 g/10 min, preferably of 0.1 to 1.2 g/10 min, more preferably of 0.2 to 1.0 g/10 min and even more preferably of 0.3 to 1.0 g/10 min.

The $MFR_2$ (190°C, 2.16 kg, ISO 1133) of the multimodal copolymer (P) is in the range of 0.1 to 10.0 g/10 min, preferably 0.3 to 8.0 g/10 min, more preferably 0.5 to 5.0 g/10 min and even more preferably 1.0 to 3.0 g/10 min.

The multimodal copolymer (P) has a ratio of the $MFR_{21}$ (190°C, 21.6 kg, ISO 1133) to $MFR_2$ (190°C, 2.16 kg, ISO 1133), $MFR_{21}/MFR_2$, in the range of from greater than 20 to 50, preferably from 21 to 40, more preferably from 25 to 35.

In one further embodiment, the ratio of the $MFR_2$ (190°C, 2.16 kg, ISO 1133) of ethylene polymer component (A) to the $MFR_2$ (190°C, 2.16 kg, ISO 1133) of the final multimodal copolymer (P) may be 1.5 to lower than 5.1, preferably 2.3 to 5.0, more preferably 2.5 to 4.5 and even more preferably 2.8 to 4.0.

Naturally, in addition to multimodality with respect to, i.e. difference between, the $MFR_2$ of ethylene polymer components (A) and (B), and optionally multimodality, i.e. difference between, the $MFR_2$ of fractions (A-1) and (A-2), the multimodal PE of the invention can also be multimodal e.g. with respect to one or both of the two further properties: multimodality with respect to, i.e. difference between,

- the comonomer content(s) and/or type present in the ethylene polymer components (A) and (B); and/or
- the density of the ethylene polymer components (A) and (B).

The multimodal copolymer (P) is further multimodal with respect to the comonomer type and preferably with respect to the comonomer content (wt%), wherein the alpha-olefin comonomer having from 4 to 10 carbon atoms of ethylene polymer component (A) is different from the alpha-olefin comonomer having from 4 to 10 carbon atoms of ethylene polymer component (B), preferably wherein the alpha-olefin comonomer having from 4 to 10 carbon atoms of ethylene polymer component (A) is 1-butene and the alpha-olefin comonomer having from 4 to 10 carbon atoms of ethylene polymer component (B) is 1-hexene.

The comonomer type for the optional polymer fractions (A-1) and (A-2) is the same, thus the same alpha-olefin comonomer having from 4 to 10 carbon atoms is used for fraction (A-1) and (A-2), more preferably both fractions therefore have 1-butene as comonomer.

The comonomer content of component (A) and (B) can be measured, or, in case, and preferably, one of the components is produced first and the other thereafter in the presence of the first produced in so called multistage process, then the comonomer content of the first produced component, e.g. component (A), can be measured and the comonomer content of the other component, e.g. component (B), can be calculated according to following formula:

Comonomer content (mol%) in component B = (comonomer content (mol%) in final product - (weight fraction of component A * comonomer content (mol%) in component A)) / (weight fraction of component B)

The total amount of 1-butene, based on the multimodal polymer (P) is preferably in the range of from 0.1 to 1.5 wt%, preferably 0.2 to 1.2 wt% and more preferably 0.3 to 1.0 wt%. The total amount of 1-hexene, based on the multimodal polymer (P) preferably is in the range of 2.0 to 20.0 wt%, preferably 4.0 to 15.0 wt% and more preferably 5.0 to 12.0 wt%.

The total amount (wt%) of 1-butene, present in the ethylene polymer component (A) is of 0.5 to 5.0 wt%, preferably of 0.8 to 4.0 wt%, more preferably of 1.0 to 3.0 wt%, even more preferably of 1.0 to 2.5 wt%, based on the ethylene-1-butene polymer component (A).

The total amount (wt%) of 1-hexene, present in the ethylene polymer component (B) is of 8.0 to 25.0 wt%, preferably of 10.0 to 22.0 wt%, more preferably of 12.0 to 20.0 wt%, based on the ethylene-1-hexene polymer component (B).

Even more preferably the multimodal polymer (P) of the invention is further multimodal with respect to difference in density between the ethylene polymer component (A) and ethylene polymer component (B). Preferably, the density of ethylene polymer component (A) is different, preferably higher, than the density of the ethylene polymer component (B).

The density of the ethylene polymer component (A) is in the range of 920 to 950 $kg/m^3$, preferably of 925 to 950 $kg/m^3$, more preferably 930 to 945 $kg/m^3$ and/or the density of the ethylene polymer component (B) is of in the range of 890 to 915 $kg/m^3$, preferably of 895 to 910 $kg/m^3$.

The polymer fractions (A-1) has a density in the range of from 920 to 960 $kg/m^3$, preferably of 925 to 955 $kg/m^3$, more preferably of 930 to 950 $kg/m^3$, like 935 to 945 $kg/m^3$.

The density of polymer fraction (A-2) may be the same as for polymer fraction (A-1) or may be different from the density of the polymer fraction (A-1).

The density of the polymer fraction (A-2) is thus in the range of from 920 to 960 kg/m$^3$, preferably of 925 to 955 kg/m$^3$ and more preferably of 930 to 950 kg/m$^3$, like 935 to 945 kg/m$^3$.

The metallocene catalysed multimodal copolymer (P) is preferably a linear low density polyethylene (LLDPE) which has a well known meaning.

The density of the multimodal copolymer (P) is in the range of 910 to 940 kg/m$^3$, preferably of 912.0 to 935 kg/m$^3$, more preferably of 915.0 to 930.0 kg/m$^3$, even more preferably of 916 to 928 kg/m$^3$, and yet more preferably in the range of 918 to 925 kg/m$^3$.

More preferably the multimodal copolymer (P) is multimodal at least with respect to, i.e. has a difference between, the $MFR_2$, the comonomer content as well as with respect to, i.e. has a difference between, the density of the ethylene polymer components (A) and (B), as defined above, below or in the claims including any of the preferable ranges or embodiments of the polymer composition.

It is within the scope of the invention, that the first and the second ethylene polymer fraction (A-1 and A-2) of the ethylene polymer component (A) are present in a weight ratio of 4:1 up to 1:4, such as 3:1 to 1:3, or 2:1 to 1:2, or 1:1.

The ethylene polymer component (A) is present in an amount of 30.0 to 70.0 wt% based on the multimodal copolymer (P), preferably in an amount of 32.0 to 55.0 wt% and even more preferably in an amount of 34.0 to 45.0 wt%.

Thus, the ethylene polymer component (B) is present in an amount of 70.0 to 30.0 wt% based on the multimodal copolymer (P), preferably in an amount of 68.0 to 45.0 wt% and more preferably in an amount of 66.0 to 55.0 wt%.

The metallocene catalysed multimodal copolymer (P) according to the present invention has improved rheological properties, which lead to an improved processability without any detrimental effects on other polymer properties.

The metallocene catalysed multimodal copolymer (P) is therefore further characterized by a rheological polydispersity index defined as $10^5/Gc$ with Gc being the crossover modulus from dynamic rheology according to ISO 6271-10 at 190°C in the range of greater than 0.57 to 2.0 $Pa^{-1}$, preferably in the range of 0.60 to 1.5 $Pa^{-1}$, more preferably in the range of 0.62 to 1.2 $Pa^{-1}$ and a shear thinning index $SHI_{0/50}$ measured as described in the experimental part in the range of greater than 1.80 to 10.0, preferably in the range of 2.00 to 8.0, more preferably in the range of 2.5 to 5.0.

The shear thinning index $SHI_{0/50}$ is the ratio of the complex viscosity at 190°C and a shear stress of 0 kPa ($\eta$*0) and the complex viscosity at 190°C and a shear stress of 50 kPa ($\eta$*50).

Alternatively or in addition, the metallocene catalysed multimodal copolymer (P) may be further characterized by shear thinning index $SHI_{1/100}$ measured as described in the experimental part in the range of greater than 2.2 to 10.0, preferably in the range of 2.5 to 8.0, more preferably in the range of 3.0 to 5.0.

The shear thinning index $SHI_{1/100}$ is the ratio of the complex viscosity at 190°C and a shear stress of 1 kPa ($\eta$*1) and the complex viscosity at 190°C and a shear stress of 100 kPa ($\eta$*100).

The metallocene catalysed multimodal copolymer (P), can be produced in a 2-stage process, preferably comprising a slurry reactor (loop reactor), whereby the slurry (loop) reactor is connected in series to a gas phase reactor (GPR), whereby the ethylene polymer component (A) is produced in the loop reactor and the ethylene polymer component (B) is produced in GPR in the presence of the ethylene polymer component (A) to produce the multimodal copolymer (P).

In case that the ethylene component (A) of the multimodal copolymer (P) consists of ethylene polymer fractions (A-1) and (A-2), the multimodal copolymer (P) can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). The loop reactor 2 is thereby connected in series to a gas phase reactor (GPR), so that the first ethylene polymer component (A) leaving the second slurry reactor is fed to the GPR to produce a trimodal polyethylene copolymer. In this case, the reaction conditions in the two slurry reactors are chosen in a way that in the two slurry reactors different products in view of MFR and/or density are produced.

Such a process is described inter alia in WO 2016/198273, WO 2021009189, WO 2021009190, WO 2021009191 and WO 2021009192. Full details of how to prepare suitable metallocene catalysed multimodal copolymer (P) can be found in these references.

A suitable process is the Borstar PE process or the Borstar PE 3G process.

The metallocene catalysed multimodal copolymer (P) according to the present invention is therefore preferably produced in a loop gas cascade or a loop loop gas cascade. Such polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry and the amount of polymer produced in an optional prepolymerization step is counted to the amount (wt%) of ethylene polymer component (A).

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent

polymerization stages. Also in such cases it is necessary to introduce so much cocatalyst into the prepolymerization stage that a sufficient polymerization reaction is obtained therein.

It is understood within the scope of the invention, that the amount or polymer produced in the prepolymerization lies within 1.0 to 5.0 wt% in respect to the final metallocene catalysed multimodal copolymer (P). This can counted as part of the first ethylene polymer component (A).

*Catalyst*

The metallocene catalysed multimodal copolymer (P) used in the process of the invention is one made using a metallocene catalyst. A metallocene catalyst comprises a metallocene complex and a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I):

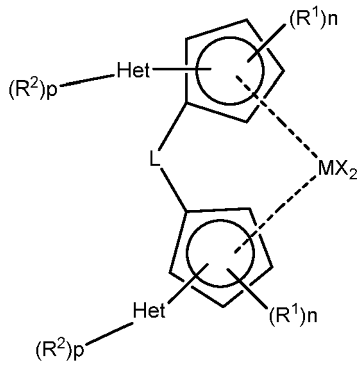

(I)

wherein each X is independently a halogen atom, a $C_{1-6}$-alkyl, $C_{1-6}$-alkoxy group, phenyl or benzyl group;
each Het is independently a monocyclic heteroaromatic group containing at least one heteroatom selected from O or S;
L is -$R'_2$Si-, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or -Si(R)$_3$ group;
each R is $C_{1-10}$-alkyl or phenyl group optionally substituted by 1 to 3 $C_{1-6}$-alkyl groups; and each p is 0 to 1.

Preferably, the compound of formula (I) has the structure

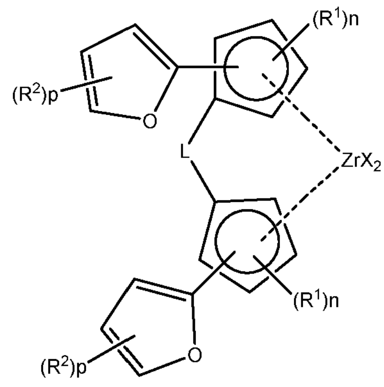

(I′)

wherein each X is independently a halogen atom, a $C_{1-6}$-alkyl, $C_{1-6}$-alkoxy group, phenyl or benzyl group;
L is a $Me_2Si$-;
each $R^1$ is the same or different and is a $C_{1-6}$-alkyl group, e.g. methyl or t-Bu;
each n is 1 to 2;
$R^2$ is a $-Si(R)_3$ alkyl group; each p is 1;
each R is $C_{1-6}$-alkyl or phenyl group.

Highly preferred complexes of formula (I) are

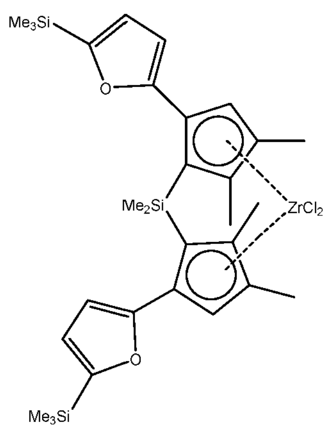
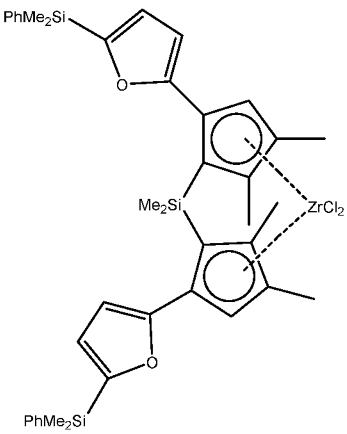
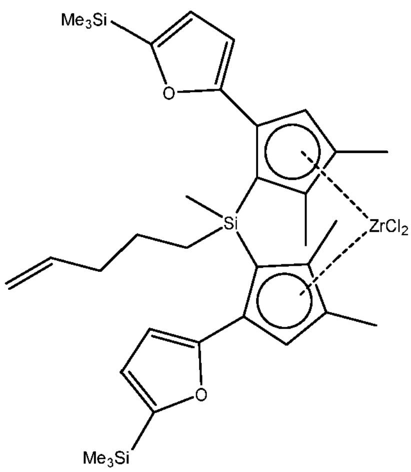
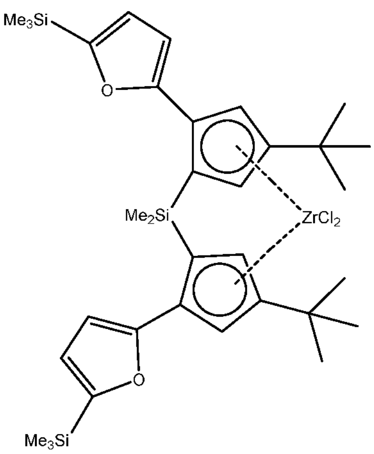

Most preferably the complex dimethylsilanediylbis[2-(5-trimethylsilylfuran-2-yl)-4,5-dimethylcyclopentadien-1-yl] zirconium dichloride is used.

More preferably the ethylene polymer components (A) and (B) of the multimodal copolymer (P) are produced using, i.e. in the presence of, the same metallocene catalyst.

To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred. Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

The metallocene catalysed multimodal copolymer (P) may contain further polymer components and optionally additives and/or fillers. In case the metallocene catalysed multimodal copolymer (P) contains further polymer components, then the amount of the further polymer component(s) typically varies between 3.0 to 20.0 wt% based on the combined amount of the metallocene catalysed multimodal copolymer (P) and the other polymer component(s).

The optional additives and fillers and the used amounts thereof are conventional in the field of film applications. Examples of such additives are, among others, antioxidants, process stabilizers, UV-stabilizers, pigments, fillers, antistatic additives, antiblock agents, nucleating agents, acid scavengers as well as polymer processing agent (PPA).

It is understood herein that any of the additives and/or fillers can optionally be added in so-called master batch, which comprises the respective additive(s) together with a carrier polymer. In such case the carrier polymer is not calculated to the polymer components of the metallocene catalysed multimodal copolymer (P), but to the amount of the respective additive(s), based on the total amount of polymer composition (100 wt%).

## Film of the invention

A further embodiment the present invention is further related to the use of the above defined metallocene-catalysed multimodal polyethylene copolymer (P) for producing blown films and to the blown films made of such metallocene-catalysed multimodal polyethylene copolymer (P).

The film of the invention comprises at least one layer comprising the metallocene catalysed multimodal copolymer (P). The film can be a monolayer film comprising the metallocene catalysed multimodal copolymer (P) or a multilayer film, wherein at least one layer comprises the metallocene catalysed multimodal copolymer (P). The terms "monolayer film" and multilayer film" have well known meanings in the art.

The layer of the monolayer or multilayer film of the invention may consist of the metallocene catalysed multimodal copolymer (P) as such or of a blend of the metallocene catalysed multimodal copolymer (P) together with further polymer(s). In case of blends, any further polymer is different from the metallocene catalysed multimodal copolymer (P) and is preferably a polyolefin. Part of the above mentioned additives, like processing aids, can optionally added to the metallocene catalysed multimodal copolymer (P) during the film preparation process.

Preferably, the at least one layer of the invention comprises at least 50 wt%, more preferably at least 60 wt%, even more preferably at least 70 wt%, yet more preferably at least 80 wt%, of the metallocene catalysed multimodal copolymer (P) of the invention. Most preferably said at least one layer of the film of invention consists of the metallocene catalysed multimodal copolymer (P).

Accordingly, the films of the present invention may comprise a single layer (i.e. monolayer) or may be multilayered. Multilayer films typically, and preferably, comprise at least 3 layers.

The films are preferably produced by any conventional blown film extrusion procedure known in the art. Most preferably, the blown film is produced by extrusion through an annular die and blowing into a tubular film by forming a bubble, which is collapsed between nip rollers after solidification. This film can then be slit, cut or converted (e.g. gusseted) as desired. Conventional film production techniques may be used in this regard. If the blown is a multilayer film then the various layers are typically coextruded. The skilled man will be aware of suitable extrusion conditions.

Films according to the present invention may be subjected to post-treatment processes, e.g. surface modifications, lamination or orientation processes or the like. Such orientation processes can be mono-axially (MDO) or bi-axially orientation, wherein mono-axial orientation is preferred.

In another preferred embodiment, the films are unoriented.

The resulting films may have any thickness conventional in the art. The thickness of the film is not critical and depends on the end use. Thus, films may have a thickness of, for example, 300 $\mu$m or less, typically 6 to 200 $\mu$m, preferably 10 to 180 $\mu$m, e.g. 20 to 150 $\mu$m or 20 to 120 $\mu$m. If desired, the polymer of the invention enables thicknesses of less than 100 $\mu$m, e.g. less than 50 $\mu$m. Films of the invention with thickness even less than 20 $\mu$m can also be produced whilst maintaining good mechanical properties.

Furthermore, the present invention is also directed to the use of the inventive article as packing material, in particular as a packing material for food and/or medical products.

The invention is further directed to a film comprising at least one layer comprising the metallocene-catalysed multimodal polyethylene copolymer (P).

The film is characterized by a sealing initiation temperature (SIT) measured as described in the experimental part on a 40 μm monolayer test blown film of below 97°C, preferably in the range of 60 to 96°C, more preferably in the range of 70 to 95°C and even more preferably in the range of 80 to 94°C.

In an embodiment, the films comprising the metallocene catalysed multimodal copolymer (P) are additionally characterized by a dart-drop impact strength (DDI) determined according to ASTM D1709, method A on a 40 μm monolayer test blown film of at least 500 g to more than 1700 g, preferably 600 g to 1500 g and more preferably 700 g to 1200 g. The upper limit of "more than 1700 g" is due to the upper detection limit of 1700 g of the respective method.

Thus, in a preferred embodiment, the films comprising the metallocene catalysed multimodal polyethylene copolymer (P) are characterized by having at least

a) a sealing initiation temperature determined as described in the experimental part on a blown film with a thickness of 40 μm of below 97°C, preferably in the range of 60 to 96°C, more preferably in the range of 70 to 95°C and even more preferably in the range of 80 to 94°C,

and

b) a dart-drop impact strength (DDI) determined according to ASTM D1709, method A on a 40 μm monolayer test blown film of at least 500 g to more than 1700 g, preferably 600 g to 1500 g and more preferably 700 g to 1200 g.

Films according to the present invention furthermore have good stiffness (tensile modulus measured on a 40 μm monolayer test blown film according to ISO 527-3), i.e. > 150MPa (in both directions).

Thus, the films comprising the metallocene catalysed multimodal copolymer (P) may further or in addition have a tensile modulus (measured on a 40 μm monolayer test blown film according to ISO 527-3) in machine (MD) as well as in transverse (TD) direction in the range of from > 150MPa to 400 MPa, preferably of from 200 MPa to 350 MPa.

The specific design of the metallocene catalysed multimodal copolymer (P) of the invention makes the polymer very beneficial for making films. Benefits can be seen in excellent extrudability and especially in the clearly higher output, which is possible by using the metallocene catalysed multimodal copolymer (P) of the invention in the film making machinery than corresponding film materials having the same level of density and MFR.

The higher possible throughput is not achieved at the expense of good mechanical properties.

The films made from such a metallocene-catalysed multimodal polyethylene copolymer (P) have in addition an improved balance of properties, especially in view of lower sealing initiation temperature (SIT), higher stiffness (i.e. tensile modulus) and good impact strength (i.e. dart drop impact, DDI).

The invention will be further described with reference to the following non-limiting examples.

**Determination methods**

Unless otherwise stated in the description or in the experimental part, the following methods were used for the property determinations of the polymers (including its fractions and components) and/or any sample preparations thereof as specified in the text or experimental part.

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR is determined at 190°C for polyethylene. MFR may be determined at different loadings such as 2.16 kg ($MFR_2$), 5 kg ($MFR_5$) or 21.6 kg ($MFR_{21}$).

*Calculation of $MFR_2$ of Component B and of Fraction (A-2)*

$$\log A = x \cdot \log B + (1-x) \cdot \log C$$

$$C = 10^{\wedge}\frac{(\log A - x.\log B)}{(1-x)}$$

For Component B:

B = $MFR_2$ of Component (A)
C = $MFR_2$ of Component (B)
A = final $MFR_2$ (mixture) of multimodal polyethylene copolymer (P)
X = weight fraction of Component (A)

For Fraction (A-2):

B = $MFR_2$ of 1st fraction (A-1)
C = $MFR_2$ of 2nd fraction (A-2)
A = final $MFR_2$ (mixture) of loop polymer (=Component (A))
X = weight fraction of the 1st fraction (A-1)

**Density**

Density of the polymer was measured according to ASTM; D792, Method B (density by balance at 23°C) on compression moulded specimen prepared according to EN ISO 1872-2 and is given in kg/$m^3$.

**Comonomer contents:**

**Quantification of microstructure by NMR spectroscopy**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimized 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilizing the NOE at short recycle delays of 3 s {pollard04, klimke06} and the RS-HEPT decoupling scheme{fillip05,griffin07}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way.

Characteristic signals corresponding to the incorporation of 1-butene were observed and the comonomer fraction calculated as the fraction of 1-butene in the polymer with respect to all monomer in the polymer:

$$fBtotal = Btotal / (Etotal + Btotal + Htotal)$$

The amount isolated 1-butene incorporated in EEBEE sequences was quantified using the integral of the *B2 sites at 39.8 ppm accounting for the number of reporting sites per comonomer:

$$B = I_{*B2}$$

If present the amount consecutively incorporated 1-butene in EEBBEE sequences was quantified using the

integral of the ααB2B2 site at 39.4 ppm accounting for the number of reporting sites per comonomer:

$$BB = 2 * I\alpha\alpha B2B2$$

If present the amount non consecutively incorporated 1-butene in EEBEBEE sequences was quantified using the integral of the ββB2B2 site at 24.6 ppm accounting for the number of reporting sites per comonomer:

$$BEB = 2 * I\beta\beta B2B2$$

Due to the overlap of the *B2 and *βB2B2 sites of isolated (EEBEE) and non-consecutively incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

Sequences of BBB were not observed. The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = Htotal / (Etotal + Btotal + Htotal)$$

The amount isolated 1-hexene incorporated in EEHEE sequences was quantified using the integral of the *B4 sites at 38.3 ppm accounting for the number of reporting sites per comonomer:

$$H = I_{*B4}$$

If present the amount consecutively incorporated 1-hexene in EEHHEE sequences was quantified using the integral of the ααB4B4 site at 40.5 ppm accounting for the number of reporting sites per comonomer:

$$HH = 2 * I\alpha\alpha B4B4$$

If present the amount non consecutively incorporated 1-hexene in EEHEHEE sequences was quantified using the integral of the ββB4B4 site at 24.7 ppm accounting for the number of reporting sites per comonomer:

$$HEH = 2 * I\beta\beta B4B4$$

Sequences of HHH were not observed. The total 1-hexene content was calculated based on the sum of isolated, consecutive and non consecutively incorporated 1-hexene:

$$Htotal = H + HH + HEH$$

The total mole fraction of 1-hexene in the polymer was then calculated as:

$$fH = Htotal / ( Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (fB * 56.11) + (fH * 84.16) + ((1-(fB + fH)) * 28.05) )$$

References:

Klimke, K., Parkinson, M., Piel, C., Kaminsky, W., Spiess, H.W., Wilhelm, M., Macromol. Chem. Phys. 2006;207:382.
Parkinson, M., Klimke, K., Spiess, H.W., Wilhelm, M., Macromol. Chem. Phys. 2007;208:2128.
Pollard, M., Klimke, K., Graf, R., Spiess, H.W., Wilhelm, M., Sperber, O., Piel, C., Kaminsky, W., Macromolecules 2004;37:813.
Filip, X., Tripon, C., Filip, C., J. Mag. Resn. 2005, 176, 239
Griffin, J.M., Tripon, C., Samoson, A., Filip, C., and Brown, S.P., Mag. Res. in Chem. 2007 45, S1, S198
Castignolles, P., Graf, R., Parkinson, M., Wilhelm, M., Gaborieau, M., Polymer 50 (2009) 2373
Busico, V., Cipullo, R., Prog. Polym. Sci. 26 (2001) 443
Busico, V., Cipullo, R., Monaco, G., Vacatello, M., Segre, A.L., Macromoleucles 30 (1997) 6251
Zhou, Z., Kuemmerle, R., Qiu, X., Redwine, D., Cong, R., Taha, A., Baugh, D. Winniford, B., J. Mag. Reson. 187 (2007) 225
Busico, V., Carbonniere, P., Cipullo, R., Pellecchia, R., Severn, J., Talarico, G., Macromol. Rapid Commun. 2007, 28, 1128
Resconi, L., Cavallo, L., Fait, A., Piemontesi, F., Chem. Rev. 2000, 100, 1253

**Rheology:**

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates using nitrogen atmosphere and setting a strain within the linear viscoelastic regime. The oscillatory shear tests were done at 190°C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be

given by

$$\sigma(t) = \sigma_0 \sin(\omega t + \delta) \quad (2)$$

where $\sigma_0$, and $\gamma_0$ are the stress and strain amplitudes, respectively; $\omega$ is the angular frequency; $\delta$ is the phase shift (loss angle between applied strain and stress response); t is the time.

Dynamic test results are typically expressed by means of several different rheological functions, namely the shear storage modulus, G', the shear loss modulus, G", the complex shear modulus, G*, the complex shear viscosity, $\eta$*, the dynamic shear viscosity, $\eta$', the out-of-phase component of the complex shear viscosity, $\eta$" and the loss tangent, tan $\eta$, which can be expressed as follows:

$$G' = \frac{\sigma_0}{\gamma_0} \cos\delta \text{ [Pa]} \quad (3)$$

$$G'' = \frac{\sigma_0}{\gamma_0} \sin\delta \text{ [Pa]} \quad (4)$$

$$G^* = G' + iG'' \text{ [Pa]} \quad (5)$$

$$\eta^* = \eta' - i\eta'' \text{ [Pa·s]} \quad (6)$$

$$\eta' = \frac{G''}{\omega} \text{ [Pa·s]} \quad (7)$$

$$\eta'' = \frac{G'}{\omega} \text{ [Pa·s]} \quad (8)$$

The determination of so-called Shear Thinning Index, which correlates with MWD and is independent of Mw, is done as described in equation 9.

$$SHI_{(x/y)} = \frac{\text{Eta* for (G* = x kPa)}}{\text{Eta* for (G* = y kPa)}} \quad (9)$$

For example, the $SHI_{(2.7/210)}$ is defined by the value of the complex viscosity, in Pa s, determined for a value of G* equal to 2.7 kPa, divided by the value of the complex viscosity, in Pa s, determined for a value of G* equal to 210 kPa and the $SHI_{(5/200)}$ is defined by the value of the complex viscosity, in Pa s, determined for a value of G* equal to 5 kPa, divided by the value of the complex viscosity, in Pa s, determined for a value of G* equal to 200 kPa.

The values of storage modulus (G'), loss modulus (G"), complex modulus (G*) and complex viscosity ($\eta$*) were obtained as a function of frequency ($\omega$).

Thereby, e.g. $\eta^*_{300rad/s}$ ($eta^*_{300rad/s}$) is used as abbreviation for the complex viscosity at the frequency of 300 rad/s and $\eta^*_{0.05rad/s}$ ($eta^*_{0.05rad/s}$) is used as abbreviation for the complex viscosity at the frequency of 0.05 rad/s.

The loss tangent tan (delta) is defined as the ratio of the loss modulus (G") and the storage modulus (G') at a given frequency. Thereby, e.g. $tan_{0.05}$ is used as abbreviation for the ratio of the loss modulus (G") and the storage modulus (G') at 0.05 rad/s and $tan_{300}$ is used as abbreviation for the ratio of the loss modulus (G") and the storage modulus (G') at 300 rad/s.

The elasticity balance $tan_{0.05}/tan_{300}$ is defined as the ratio of the loss tangent $tan_{0.05}$ and the loss tangent $tan_{300}$.

Besides the above mentioned rheological functions one can also determine other rheological parameters such as the so-called elasticity index *EI(x)*. The elasticity index *Ei(x)* is the value of the storage modulus, G' determined for a value of the loss modulus, G" of *x* kPa and can be described by equation 10.

$$EI(x) = G' \, for \, (G'' = x \, kPa) \, [Pa] \qquad (10)$$

For example, the EI(5kPa) is the defined by the value of the storage modulus G', determined for a value of G" equal to 5 kPa.

The polydispersity index, *PI,* is defined by equation 11.

$$PI = \frac{10^5}{G'(\omega_{COP})}, \qquad \omega_{COP} = \omega \text{ for } (G' = G'') \qquad (11)$$

where $\omega_{COP}$ is the cross-over angular frequency, determined as the angular frequency for which the storage modulus, G', equals the loss modulus, G".

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus *"Interpolate y-values to x-values from parameter"* and the *"logarithmic interpolation type"* were applied.

References:

[1] "Rheological characterization of polyethylene fractions", Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362.

[2] "The influence of molecular structure on some rheological properties of polyethylene", Heino, E.L., Borealis Polymers Oy, Porvoo, Finland, Annual Transactions of the Nordic Rheology Society, 1995.

[3] "Definition of terms relating to the non-ultimate mechanical properties of polymers", Pure & Appl. Chem., Vol. 70, No. 3, pp. 701-754, 1998.

**Sealing initiation temperature (SIT); sealing end temperature (SET), sealing range:**

The method determines the sealing temperature range (sealing range) of polyethylene films, in particular blown films or cast films. The sealing temperature range is the temperature range, in which the films can be sealed according to conditions given below.

The lower limit (heat sealing initiation temperature (SIT)) is the sealing temperature at which a sealing strength of ≥ 5 N is achieved. The upper limit (sealing end temperature (SET)) is reached, when the films stick to the sealing device.

The measurement was done according to the slightly modified ASTM F1921 - 12, where the test parameters sealing pressure, cooling time and test speed have been modified. The determination of the force/temperature curve was continued until thermal failure of the film.

The sealing range was determined on a J&B Universal Sealing Machine Type 4000 with a blown film of 40 μm thickness with the following further parameters:

Conditioning time: > 96 h
Specimen width: 25 mm
Sealing pressure: 0.4 N/mm$^2$ (PE)
Sealing time: 1 sec
Delay time: 30 sec
Sealing jaws dimension: 50x5 mm
Sealing jaws shape: flat
Sealing jaws coating: Niptef
Sealing temperature: ambient - 240°C
Sealing temperature interval: 5°C
Start temperature: 50°C
Grip separation rate: 42 mm/sec

**Dart drop strength (DDI)**

Dart-drop was measured using ASTM D1709, method A (Alternative Testing Technique) from the films as

produced indicated below. A dart with a 38 mm diameter hemispherical head was dropped from a height of 0.66 m onto a multilayer film clamped over a hole. Successive sets of twenty specimens were tested. One weight was used for each set and the weight was increased (or decreased) from set to set by uniform increments. The weight resulting in failure of 50 % of the specimens was calculated and reported.

**Tensile Modulus**

Tensile modulus (E-Mod (MPa) was measured in machine and/or transverse direction according to ISO 527-3 on film samples prepared as described under the Film Sample preparation with film thickness of 40 $\mu$m and at a cross head speed of 1 mm/min for the modulus.

**Experimental part**

**Cat.Example: Catalyst preparation for Inventive Examples (CAT1)**

*Loading of SiO2:*

10 kg of silica (PQ Corporation ES757, calcined 600°C) was added from a feeding drum and inertized in the reactor until $O_2$ level below 2 ppm was reached.

*Preparation of MAO/tol/MC:*

30 wt% MAO in toluene (14.1 kg) was added into another reactor from a balance followed by toluene (4.0 kg) at 25°C (oil circulation temp) and stirring 95 rpm. Stirring speed was increased 95 rpm -> 200 rpm after toluene addition, stirring time 30 min. Metallocene Racdimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring 40 rpm for MAO/tol/MC addition. MAO/tol/MC solution (target 22.5 kg, actual 22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour.

After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

**Catalyst for Comparative Examples (CAT2)**

As catalyst CAT2 an alumoxane containing, supported catalyst containing metallocene bis(1-methyl-3-n-butylcyclopentadienyl) zirconium (IV) chloride and with enhanced ActivCat® activator technology from Grace was used.

**Polymerization: Inventive Examples: Inventive multimodal polyethylene copolymer (P) with 1-butene and 1-hexene comonomers**

Borstar pilot plant with a 3-reactor set-up (loop1 - loop2 - GPR 1) and a prepolymerization loop reactor.

The inventive multimodal copolymers (P) of example 1 (IE1) as well as of the comparative example (CE1) were produced by using the polymerization conditions as given in Table 1.

**Table 1:** Polymerization conditions

| | IE | CE |
|---|---|---|
| | CAT1 | CAT2 |
| **Prepoly reactor** | | |
| **Temp. (°C)** | 50 | **50** |
| Press. (kPa) | 5615 | 5391 |
| C2 (kg/h) | 4.0 | 4.0 |
| H2 (g/h) | 0.0 | 0.2 |
| C4 (g/h) | 79.0 | 100.0 |
| Solit (%) | 3.5 | 3.0 |
| **loop 1 Fraction (A-1)** | | |
| Temp. (°C) | 85 | 85 |
| Press. (kPa) | 5543 | 5148 |
| C2 conc. (mol%) | 4.3 | 2.6 |
| H2/C2 ratio (mol/kmol) | 0.38 | 0.19 |
| C4/C2 ratio (mol/kmol) | 43.0 | 104.7 |
| Split % | 17.9 | 18.2 |
| Density (kg/m$^3$) | 939.2 | 939.6 |
| MFR2 (g/10 min) | 3.4 | 5.9 |
| **loop 2** | | : I |
| Temp. (°C) | 85 | 85 |
| Press. (kPa) | 5335 | 4964 |
| C2 conc. (mol%) | 4.0 | 2.8 |
| H2/C2 ratio (mol/kmol) | 0.5 | 0.1 |
| C4/C2 ratio (mol/kmol) | 29 | 94 |
| Split (%) | 20.7 | 21.4 |
| Density (kg/m$^3$) after loop 2 (component (A)) | 938.6 | 940.5 |
| MFR2 (g/10 min) after loop 2 (component (A)) | 5.2 | 7.3 |
| MFR2 (g/10 min) of loop 2 material (fraction (A-2)) | 8 | 9 |
| Density (kg/m3) of loop 2 material (fraction (A-2)) | 938 | 941 |
| C4 (wt%) after loop 2 material (component (A)) | 1.43 | 0.94 |
| **GPR** | | |
| Temp. (°C) | 75 | 76 |
| Press. (kPa) | 2000 | 2000 |
| C2 partial Press. (kPa) | 686 | 779 |
| H2/C2 ratio (mol/kmol) | 1.17 | 0.19 |
| C6/C2 ratio (mol/kmol) | 10.03 | 28.41 |
| Split % | 57.9 | 57.4 |
| MFR2 (g/10 min) of GPR material (component B) | 0.7 | 0.4 |

(continued)

| GPR | | |
|---|---|---|
| Density (kg/m3) of GPR material (component B) | 906 | 905 |
| C6 (wt%) of GPR material (Component (B)) | 13.0 | 11.7 |

The polymers were mixed with 2400 ppm of Irganox B561, 270 ppm of Dynamar FX 5922, compounded and extruded under nitrogen atmosphere to pellets by using a JSW extruder at a melt temperature of 200°C and a throughput rate of about 220 kg/h.

**Table 2:** Material properties of inventive multimodal copolymer (P) and comparative copolymer

| Material | IE | CE |
|---|---|---|
| $MFR_2$ (g/10 min) (final) | 1.6 | 1.4 |
| $MFR_{21}$ (g/10 min) | 43.3 | 27.3 |
| $MFR_{21}/MFR_2$ | 27 | 20 |
| Density (kg/m$^3$) | 920 | 920 |
| C4 (wt%) | 0.6 | 0.4 |
| C6 (wt%) | 7.5 | 6.7 |
| $MFR_2$(A)/$MFR_2$(final) | 3.3 | 5.2 |
| PI (Pa$^{-1}$) | 0.69 | 0.55 |
| SHI (0/50) | 3.05 | 1.67 |
| SHI (1/100) | 3.39 | 2.05 |

Surprisingly, the bimodality of $MFR_2$, i.e. $MFR_2$(A)/$MFR_2$(final) of the inventive example IE is lower than for the comparative example CE, nevertheless the inventive copolymer (P) of IE has higher SHI and P!.

**Film sample preparation**

The test films consisting of the inventive multimodal copolymer (P) and respective comparative polymers of 40 μm thickness, were prepared using a Alpine 7 layer machine with 7 extruders.

As inventive examples (IE1 and IE2) the inventive polymer IE was processed at an output rate of 190 kg/h and 240 kg/h, and the comparative example (CE) was processed only at an output rate of 190 kg/h. Further film processing parameters can be seen in Table 3.

**Table 3: Film processing parameters**

| | IE-1 | IE-2 | CE |
|---|---|---|---|
| Output rate kg/h | 190 | 240 | 190 |
| BUR | 1:3 | 1:3 | 1:3 |
| Take off m/min | 30.5 | 38.5 | 30.4 |
| *Extruder A* | | | |
| Film thickness % | 14.3 | 14.3 | 14.3 |
| Melt temperature T/°C | 201 | 200 | 200 |
| Melt pressure /bar | 257 | 314 | 338 |
| *Extruder B* | | | |
| Film thickness % | 14.3 | 14.3 | 14.3 |

(continued)

| | | | |
|---|---|---|---|
| *Extruder B* | | | |
| Melt temperature T/°C | 217 | 223 | 220 |
| Melt pressure /bar | 285 | 330 | 346 |
| *Extruder C* | | | |
| Film thickness % | 14.3 | 14.3 | 14.3 |
| Melt temperature T/°C | 219 | 224 | 222 |
| Melt pressure /bar | 306 | 352 | 355 |
| *Extruder D* | | | |
| Film thickness % | 14.3 | 14.3 | 14.3 |
| Melt temperature T/°C | 219 | 226 | 224 |
| Melt pressure /bar | 338 | 379 | 388 |
| *Extruder E* | | | |
| Film thickness % | 14.3 | 14.3 | 14.3 |
| Melt temperature T/°C | 197 | 197 | 196 |
| Melt pressure /bar | 318 | 360 | 354 |
| *Extruder F* | | | |
| Film thickness % | 14.3 | 14.3 | 14.3 |
| Melt temperature T/°C | 198 | 198 | 197 |
| Melt pressure /bar | 308 | 353 | 380 |
| *Extruder G* | | | |
| Film thickness % | 14.2 | 14.2 | 14.2 |
| Melt temperature T/°C | 215 | 220 | 222 |
| Melt pressure /bar | 275 | 319 | 347 |

As can be seen from the Table above, the merit of the inventive polymer (P) from IE is, that the die pressure of each extruder A to G for !E-1 is lower than for CE (for both the throughput was 190 kg/h) and it raised to the comparable level when the throughput was 240kg/h (IE-2). Thus, with the inventive polymer (P) from IE higher levels of through put can be achieved with die pressures comparable to the comparative example at a throughput of 190 kg/h.

Additionally the take-off speed increased from 30 to 38 m/min, which means an increase of about +25% for the output rate.

The film properties are shown in Table 4.

**Table 4: Properties of films with 40μm thickness**

| | IE-1 | IE-2 | CE |
|---|---|---|---|
| TM-MD/MPa | 216 | 203 | 177 |
| TM-TD/MPa | 266 | 250 | 208 |
| DDI/g | 712 | 712 | 735 |
| SIT /°C | 91 | 93 | 97 |
| n.m not measured | | | |

From the above table it can be clearly seen, that the improved processability of the inventive multimodal copolymer (P) has no negative effect on the film properties, i.e. films consisting of the inventive multimodal copolymer

(P) show an even lower sealing initiation temperature (SIT), higher tensile modulus and comparable DDI, thus having an improved overall performance.

## Claims

1. A metallocene-catalysed multimodal polyethylene copolymer (P) of ethylene with at least two different comonomers selected from alpha-olefins having from 4 to 10 carbon atoms, which consists of

   (i) 30.0 to 70.0 wt% of an ethylene polymer component (A) with a comonomer selected from alpha-olefins having from 4 to 10 carbon atoms, and
   (ii) 70.0 to 30.0 wt% of an ethylene polymer component (B) with a comonomer selected from alpha-olefins having from 4 to 10 carbon atoms, wherein the alpha-olefin comonomer having from 4 to 10 carbon atoms of ethylene polymer component (A) is different from the alpha-olefin comonomer having from 4 to 10 carbon atoms of ethylene polymer component (B),
   whereby the ethylene polymer component (A) has a density in the range of from 920 to 950 kg/$m^3$ and an $MFR_2$, determined at 190°C, 2.16 kg, according to ISO 1133, in the range of from 1.0 to 20.0 g/10 min; and the ethylene polymer component (B) has a density in the range of from 890 to 915 kg/$m^3$ and an $MFR_2$, determined at 190°C, 2.16 kg, according to ISO 1133, in the range of from 0.01 to 1.5 g/10 min; and
   whereby the multimodal polyethylene copolymer (P) has

   a) a density in the range of from 910 to 940 kg/$m^3$,
   b) an $MFR_2$, determined at 190°C, 2.16 kg, according to ISO 1133, in the range of from 0.1 to 10.0 g/10 min,
   c) a ratio of the $MFR_{21}$, determined at 190°C, 21.6 kg, according to ISO 1133, to $MFR_2$, determined at 190°C, 2.16 kg, according to ISO 1133, $MFR_{21}/MFR_2$, in the range of from greater than 20 to 50,
   d) a rheological polydispersity index defined as $10^5$/Gc with Gc being the crossover modulus from dynamic rheology according to ISO 6271-10 at 190°C in the range of greater than 0.57 to 2.0 $Pa^{-1}$ and
   e) a shear thinning index $SHI_{0/50}$ measured as described in the experimental part in the range of greater than 1.80 to 10.0.

2. The metallocene-catalysed multimodal polyethylene copolymer (P) according to claim 1, wherein ethylene polymer component (A) consists of an ethylene polymer fraction (A-1) and an ethylene polymer fraction (A-2), wherein the ethylene polymer fractions (A-1) and (A-2) have a density in the range of from 920 to 960 kg/$m^3$, preferably of 925 to 955 kg/$m^3$ and more preferably of 930 to 950 kg/$m^3$, most preferably 935 to 945 kg/$m^3$and an $MFR_2$, determined at 190°C, 2.16 kg, according to ISO 1133, in the range of 0.5 to 100.0 g/10 min, preferably of 1.0 to 50.0 g/10 min, more preferably of 1.5 to 30.0 g/10 min, even more preferably of 2.0 to 15.0 g/10 min, and yet more preferably of 2.5 to 10.0 g/10 min, and

   wherein the $MFR_2$ of the ethylene polymer fractions (A-1) and (A-2) may be the same or may be different from each other, preferably, the $MFR_2$ of the ethylene polymer fractions (A-1) and (A-2) are different from each other, more preferably the ethylene polymer fraction (A-2) has a higher $MFR_2$ than ethylene polymer fraction (A-1); and wherein the density of polymer fraction (A-2) may be the same as for polymer fraction (A-1) or may be different from the density of the polymer fraction (A-1).

3. The metallocene-catalysed multimodal copolymer (P) according to claim 1 or 2, wherein

   - the ethylene polymer component (A) has a $MFR_2$ 2.0 to 15 g/10 min, preferably of 3.0 to 10 g/10 min and more preferably of 4.0 to 8.0 g/10 min and
   - the ethylene polymer component (B) has a $MFR_2$ of 0.1 to 1.2 g/10 min, preferably of 0.2 to 1.0 g/10 min and more preferably of 0.3 to 1.0 g/10 min and/or

   the $MFR_2$ of the multimodal copolymer (P) is in the range of 0.8 to 8.0 g/10 min, preferably 1.0 to 5.0 g/10 min and more preferably 1.2 to 3.0 g/10 min.

4. The metallocene-catalysed multimodal copolymer (P) according to any of the preceding claims, wherein the ratio $MFR_{21}/MFR_2$, is from 21 to 40, preferably from 25 to 35.

5. The metallocene-catalysed multimodal copolymer (P) according to any of the preceding claims, wherein the total

amount of 1-butene, based on the multimodal polymer (P) is in the range of from 0.1 to 1.5 wt%, preferably 0.2 to 1.2 wt% and more preferably 0.3 to 1.0 wt%, the total amount of 1-hexene, based on the multimodal polymer (P) is in the range of from 2.0 to 20.0 wt%, preferably 4.0 to 15.0 wt% and more preferably 5.0 to 12.0 wt%, and wherein the amount of comonomer is determined as described in the experimental part.

**6.** The metallocene-catalysed multimodal copolymer (P) according to any of the preceding claims, wherein the total amount (wt%) of 1-butene, present in the ethylene polymer component (A), is in the range of 0.5 to 5.0 wt%, preferably of 0.8 to 4.0 wt%, more preferably of 1.0 to 3.0 wt%, even more preferably of 1.0 to 2.5 wt%, based on the ethylene-1-butene polymer component (A), the total amount (wt%) of 1-hexene, present in the ethylene polymer component (B) is in the range of 8.0 to 25.0 wt%, preferably of 10.0 to 22.0 wt%, more preferably of 12.0 to 20.0 wt%, based on the ethylene-1-hexene polymer component (B), and wherein the amount of comonomer is determined as described in the experimental part.

**7.** The metallocene-catalysed multimodal copolymer (P) according to any of the preceding claims, wherein the rheological polydispersity index defined as $10^5$/Gc with Gc being the crossover modulus from dynamic rheology according to ISO 6271-10 at 190°C is in the range of 0.60 to 1.5 $Pa^{-1}$, preferably in the range of 0.62 to 1.2 $Pa^{-1}$ and/or the shear thinning index $SHI_{0/50}$ measured as described in the experimental part is in the range of 2.00 to 8.0, preferably in the range of 2.5 to 5.0.

**8.** The metallocene-catalysed multimodal copolymer (P) according to any of the preceding claims, wherein the metallocene catalysed multimodal copolymer (P) may be further **characterized by** shear thinning index $SHI_{1/100}$ measured as described in the experimental part in the range of greater than 2.2 to 10.0, preferably in the range of 2.5 to 8.0, more preferably in the range of 3.0 to 5.0.

**9.** The metallocene-catalysed multimodal copolymer (P) according to any of the preceding claims, wherein the multimodal copolymer (P) is produced in the presence of metallocene complex of formula (II):

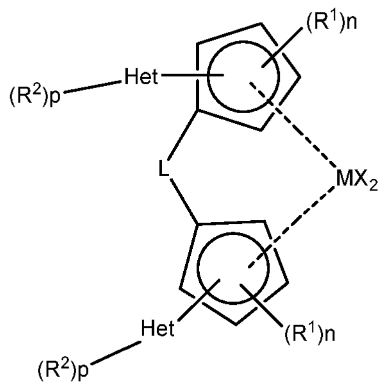

(II)

wherein each X is independently a halogen atom, a $C_{1-6}$-alkyl, $C_{1-6}$-alkoxy group, phenyl or benzyl group;
each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R_1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or $-Si(R)_3$ group;
each R is $C_{1-10}$-alkyl or phenyl group optionally substituted by 1 to 3 $C_{1-6}$-alkyl groups; and
each p is 0 to 1.

**10.** Blown film comprising a metallocene-catalysed multimodal copolymer (P) according to any of the preceding claims 1 to 9.

**11.** Film according to claim 10, wherein the film is **characterized by** a sealing initiation temperature determined as described in the experimental part on a blown film with a thickness of 40 μm of below 97°C, preferably in the range

of 60 to 96°C, more preferably in the range of 70 to 95°C and even more preferably in the range of 80 to 94°C.

**12.** Film according to claim 10, wherein the film is **characterized by** a dart-drop impact strength (DDI) determined according to ASTM D1709, method A on a 40 μm monolayer test blown film of at least 500 g to 1200 g, preferably 600 g to 1000 g and more preferably 700 g to more than 900 g.

**13.** Film according to claim 10, wherein the film is **characterized by** having at least

a) a sealing initiation temperature determined as described in the experimental part on a blown film with a thickness of 40 μm of below 97°C, preferably in the range of 60 to 96°C, more preferably in the range of 70 to 95°C and even more preferably in the range of 80 to 94°C,
and
b) a dart-drop impact strength (DDI) determined according to ASTM D1709, method A on a 40 μm monolayer test blown film of at least 500 g to 1200 g, preferably 600 g to 1000 g and more preferably 700 g to more than 900 g.

**14.** Film according to any of the claims 10 to 13, wherein the films have a tensile modulus, measured on a 40 μm monolayer test blown film according to ISO 527-3, in machine (MD) as well as in transverse (TD) direction in the range of from > 150MPa to 400 MPa, preferably of from 200 MPa to 350 MPa.

**15.** Use of a film according to any of the preceding claims 10 to 14 as packing material, in particular as a packing material for food and/or medical products.

**Patentansprüche**

**1.** Metallocen-katalysiertes multimodales Polyethylen-Copolymer (P) aus Ethylen mit mindestens zwei verschiedenen Comonomeren, ausgewählt aus Alpha-Olefinen mit 4 bis 10 Kohlenstoffatomen, bestehend aus

(i) 30,0 bis 70,0 Gew.-% einer Ethylenpolymerkomponente (A) mit einem Comonomer, ausgewählt aus Alpha-Olefinen mit 4 bis 10 Kohlenstoffatomen, und
(ii) 70,0 bis 30,0 Gew.-% einer Ethylenpolymerkomponente (B) mit einem Comonomer, ausgewählt aus Alpha-Olefinen mit 4 bis 10 Kohlenstoffatomen, wobei sich das Alpha-Olefin-Comonomer mit 4 bis 10 Kohlenstoffatomen der Ethylenpolymerkomponente (A) von dem Alpha-Olefin-Comonomer mit 4 bis 10 Kohlenstoffatomen der Ethylenpolymerkomponente (B) unterscheidet,
wobei die Ethylenpolymerkomponente (A) aufweist
eine Dichte im Bereich von 920 bis 950 kg/$m^3$ und eine $MFR_2$, bestimmt bei 190°C, 2,16 kg, gemäß ISO 1133, im Bereich von 1,0 bis 20,0 g/10 min; und
die Ethylenpolymerkomponente (B) aufweist
eine Dichte im Bereich von 890 bis 915 kg/$m^3$ und einen $MFR_2$, bestimmt bei 190°C, 2,16 kg, gemäß ISO 1133, im Bereich von 0,01 bis 1,5 g/10 min; und
wobei das multimodale Polyethylen-Copolymer (P) aufweist

a) eine Dichte im Bereich von 910 bis 940 kg/$m^3$,
b) einen $MFR_2$, bestimmt bei 190°C, 2,16 kg, gemäß ISO 1133, im Bereich von 0,1 bis 10,0 g/10 min,
c) ein Verhältnis des $MFR_{21}$, bestimmt bei 190°C, 21,6 kg, gemäß ISO 1133, zu $MFR_2$, bestimmt bei 190°C, 2,16 kg, gemäß ISO 1133, $MFR_{21}/MFR_2$, im Bereich von mehr als 20 bis 50,
d) einen rheologischen Polydispersitätsindex, definiert als $10^5$/Gc, wobei Gc der Crossover-Modul aus der dynamischen Rheologie gemäß ISO 6271-10 bei 190°C ist, im Bereich von mehr als 0,57 bis 2,0 $Pa^{-1}$, und
e) einen Scherverdünnungsindex $SHI_{0/50}$, gemessen wie im experimentellen Teil beschrieben, im Bereich von mehr als 1,80 bis 10,0.

**2.** Metallocen-katalysiertes multimodales Polyethylen-Copolymer (P) nach Anspruch 1, wobei die Ethylenpolymer-Komponente (A) aus einer Ethylenpolymer-Fraktion (A-1) und einer Ethylenpolymer-Fraktion (A-2) besteht,

wobei die Ethylenpolymerfraktionen (A-1) und (A-2) eine Dichte im Bereich von 920 bis 960 kg/$m^3$, bevorzugt von 925 bis 955 kg/$m^3$ und stärker bevorzugt von 930 bis 950 kg/$m^3$, am stärksten bevorzugt von 935 bis 945 kg/$m^3$ und einen $MFR_2$, bestimmt bei 190°C, 2. 16 kg, gemäß ISO 1133, im Bereich von 0,5 bis 100,0 g/10 min, bevorzugt von 1,0 bis 50,0 g/10 min, stärker bevorzugt von 1,5 bis 30,0 g/10 min, noch stärker bevorzugt von

2,0 bis 15,0 g/10 min und noch stärker bevorzugt von 2,5 bis 10,0 g/10 min, und
wobei der $MFR_2$ der Ethylenpolymerfraktionen (A-1) und (A-2) gleich oder voneinander verschieden sein kann, bevorzugt ist der $MFR_2$ der Ethylenpolymerfraktionen (A-1) und (A-2) voneinander verschieden, stärker bevorzugt hat die Ethylenpolymerfraktion (A-2) einen höheren $MFR_2$ als die Ethylenpolymerfraktion (A-1); und
wobei die Dichte der Polymerfraktion (A-2) die gleiche wie für die Polymerfraktion (A-1) sein kann oder sich von der Dichte der Polymerfraktion (A-1) unterscheiden kann.

**3.** Metallocen-katalysiertes multimodales Copolymer (P) nach Anspruch 1 oder 2, wobei

- die Ethylenpolymerkomponente (A) einen $MFR_2$ von 2,0 bis 15 g/10 min, bevorzugt von 3,0 bis 10 g/10 min und stärker bevorzugt von 4,0 bis 8,0 g/10 min aufweist und
- die Ethylenpolymerkomponente (B) einen $MFR_2$ von 0,1 bis 1,2 g/10 min, bevorzugt von 0,2 bis 1,0 g/10 min und stärker bevorzugt von 0,3 bis 1,0 g/10 min aufweist und/oder

der $MFR_2$ des multimodalen Copolymers (P) im Bereich von 0,8 bis 8,0 g/10 min, bevorzugt 1,0 bis 5,0 g/10 min und stärker bevorzugt 1,2 bis 3,0 g/10 min liegt.

**4.** Metallocen-katalysiertes multimodales Copolymer (P) nach einem der vorhergehenden Ansprüche, wobei das Verhältnis $MFR_{21}/MFR_2$ von 21 bis 40, bevorzugt von 25 bis 35, beträgt.

**5.** Metallocen-katalysiertes multimodales Copolymer (P) nach einem der vorhergehenden Ansprüche, wobei die Gesamtmenge an 1-Buten, bezogen auf das multimodale Polymer (P), im Bereich von 0,1 bis 1,5 Gew.-%, bevorzugt 0,2 bis 1,2 Gew.-% und stärker bevorzugt 0,3 bis 1,0 Gew.-% liegt,
die Gesamtmenge an 1-Hexen, bezogen auf das multimodale Polymer (P), im Bereich von 2,0 bis 20,0 Gew.-%, bevorzugt 4,0 bis 15,0 Gew.-% und stärker bevorzugt 5,0 bis 12,0 Gew.-% liegt, und wobei die Menge des Comonomers wie im experimentellen Teil beschrieben bestimmt wird.

**6.** Metallocen-katalysiertes multimodales Copolymer (P) nach einem der vorhergehenden Ansprüche, wobei die Gesamtmenge (Gew.-%) an 1-Buten, vorhanden in der Ethylen-Polymerkomponente (A), im Bereich von 0,5 bis 5,0 Gew.-%, bevorzugt von 0,8 bis 4,0 Gew.-%, stärker bevorzugt von 1,0 bis 3,0 Gew.-%, noch stärker bevorzugt von 1,0 bis 2,5 Gew.-%, bezogen auf die Ethylen-1-Buten-Polymerkomponente (A), liegt,
die Gesamtmenge (Gew.-%) an 1-Hexen, vorhanden in der Ethylenpolymerkomponente (B), im Bereich von 8,0 bis 25,0 Gew.-%, bevorzugt von 10,0 bis 22,0 Gew.-%, stärker bevorzugt von 12,0 bis 20,0 Gew.-%, bezogen auf die Ethylen-1-Hexen-Polymerkomponente (B), liegt, und wobei die Menge des Comonomers wie im experimentellen Teil beschrieben bestimmt wird.

**7.** Metallocen-katalysiertes multimodales Copolymer (P) nach einem der vorhergehenden Ansprüche, wobei der rheologische Polydispersitätsindex, definiert als $10^5/Gc$, wobei Gc der Crossover-Modul aus der dynamischen Rheologie gemäß ISO 6271-10 bei 190°C ist, im Bereich von 0,60 bis 1,5 $Pa^{-1}$, bevorzugt im Bereich von 0,62 bis 1,2 $Pa^{-1}$ liegt und/oder
der Scherverdünnungsindex $SHI_{0/50}$, gemessen wie im experimentellen Teil beschrieben, im Bereich von 2,00 bis 8,0, bevorzugt im Bereich von 2,5 bis 5,0 liegt.

**8.** Metallocen-katalysiertes multimodales Copolymer (P) nach einem der vorhergehenden Ansprüche, wobei das Metallocen-katalysierte multimodale Copolymer (P) ferner durch den Scherverdünnungsindex $SHI_{1/100}$, gemessen wie im experimentellen Teil beschrieben, im Bereich von mehr als 2,2 bis 10,0, bevorzugt im Bereich von 2,5 bis 8,0, stärker bevorzugt im Bereich von 3,0 bis 5,0, gekennzeichnet sein kann.

**9.** Metallocen-katalysiertes multimodales Copolymer (P) nach einem der vorhergehenden Ansprüche, wobei das multimodale Copolymer (P) in Gegenwart eines Metallocen-Komplexes der Formel (II) hergestellt wird:

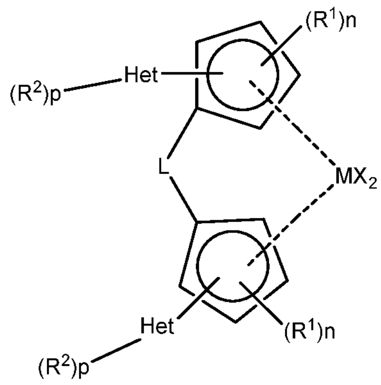

(II)

wobei jedes X unabhängig ein Halogenatom, eine $C_{1-6}$-Alkyl-, $C_{1-6}$-Alkoxygruppe, Phenyl- oder Benzylgruppe ist;
jedes Het unabhängig eine monocyclische heteroaromatische Gruppe ist, die mindestens ein Heteroatom, ausgewählt aus O oder S, enthält;
L -$R'_2$Si- ist, wobei jedes R' unabhängig $C_{1-20}$-Kohlenwasserstoff oder $C_{1-10}$-Alkyl substituiert mit Alkoxy mit 1 bis 10 Kohlenstoffatomen ist;
M Ti, Zr oder Hf ist;
jedes $R^1$ gleich oder unterschiedlich ist und eine $C_{1-6}$-Alkylgruppe oder $C_{1-6}$-Alkoxygruppe ist;
jedes n 1 bis 2 ist;
jedes $R^2$ gleich oder unterschiedlich ist und eine $C_{1-6}$-Alkylgruppe, $C_{1-6}$-Alkoxygruppe oder $Si(R)_3$-Gruppe ist;
jedes R eine $C_{1-10}$-Alkyl- oder Phenylgruppe ist, optional substituiert mit 1 bis 3 $C_{1-6}$-Alkylgruppen; und
jedes p 0 bis 1 ist.

**10.** Blasfolie, umfassend ein Metallocen-katalysiertes multimodales Copolymer (P) nach einem der vorhergehenden Ansprüche 1 bis 9.

**11.** Folie nach Anspruch 10, wobei die Folie **gekennzeichnet ist durch** eine Versiegelungsstarttemperatur, bestimmt wie beschrieben im experimentellen Teil an einer Blasfolie mit einer Dicke von 40 μm, von unter 97°C, bevorzugt im Bereich von 60 bis 96°C, stärker bevorzugt im Bereich von 70 bis 95°C und stärker bevorzugt im Bereich von 80 bis 94°C.

**12.** Folie nach Anspruch 10, wobei die Folie **gekennzeichnet ist durch** eine Dart-Drop-Schlagzähigkeit (DDI), bestimmt nach ASTM D1709, Verfahren A, an einer 40 μm einschichtigen Testblasfolie, von mindestens 500 g bis 1200 g, bevorzugt 600 g bis 1000 g und stärker bevorzugt 700 g bis mehr als 900 g.

**13.** Folie nach Anspruch 10, wobei die Folie **dadurch gekennzeichnet ist, dass** sie mindestens aufweist

a) eine Versiegelungsstarttemperatur, bestimmt wie beschrieben im experimentellen Teil an einer Blasfolie mit einer Dicke von 40 μm, von unter 97°C, bevorzugt im Bereich von 60 bis 96°C, stärker bevorzugt im Bereich von 70 bis 95°C und noch stärker bevorzugt im Bereich von 80 bis 94°C, und
b) eine Dart-Drop-Schlagzähigkeit (DDI), bestimmt nach ASTM D1709, Methode A, an einer 40 μm einschichtigem Testblasfolie von mindestens 500 g bis 1200 g, bevorzugt 600 g bis 1000 g und stärker bevorzugt 700 g bis mehr als 900 g.

**14.** Folie nach einem der Ansprüche 10 bis 13, wobei die Folien einen Zugmodul, gemessen an einer 40 μm einschichtigen Testblasfolie nach ISO 527-3, sowohl in Maschinen- (MD) als auch in Querrichtung (TD) im Bereich von > 150 MPa bis 400 MPa, bevorzugt von 200 MPa bis 350 MPa, aufweisen.

**15.** Verwendung einer Folie nach einem der vorhergehenden Ansprüche 10 bis 14 als Verpackungsmaterial, insbesondere als Verpackungsmaterial für Lebensmittel und/oder medizinische Produkte.

**Revendications**

**1.** Copolymère de polyéthylène multimodal (P) catalysé par un métallocène, constitué d'éthylène avec au moins deux

comonomères différents choisis parmi des alpha-oléfines ayant de 4 à 10 atomes de carbone, qui consiste en

(i) 30,0 à 70,0 % en poids d'un composant polymère d'éthylène (A) avec un comonomère choisi parmi des alpha-oléfines ayant de 4 à 10 atomes de carbone, et
(ii) 70,0 à 30,0 % en poids d'un composant polymère d'éthylène (B) avec un comonomère choisi parmi des alpha-oléfines ayant de 4 à 10 atomes de carbone, dans lequel le comonomère alpha-oléfine ayant de 4 à 10 atomes de carbone du composant polymère d'éthylène (A) est différent du comonomère alpha-oléfine ayant de 4 à 10 atomes de carbone du composant polymère d'éthylène (B),
le composant polymère d'éthylène (A) ayant
une densité dans la plage de 920 á 950 kg/$m^3$ et un $MFR_2$, déterminé à 190°C, 2,16 kg, selon ISO 1133, dans la plage de 1,0 á 20,0 g/10 min ; et le composant polymère d'éthylène (B) ayant
une densité dans la plage de 890 á 915 kg/$m^3$ et un $MFR_2$, déterminé à 190°C, 2,16 kg, selon ISO 1133, dans la plage de 0,01 á 1,5 g/10 min ; et le copolymère de polyéthylène multimodal (P) ayant

a) une densité dans la plage de 910 à 940 kg/$m^3$,
b) un $MFR_2$, déterminée à 190°C, 2,16 kg, selon ISO 1133, dans la plage de 0,1 à 10,0 g/10 min,
c) un rapport entre le $MFR_{21}$, déterminé à 190°C, 21,6 kg, selon ISO 1133, et le $MFR_2$, déterminé à 190°C, 2,16 kg, selon ISO 1133, $MFR_{21}/MFR_2$, dans la plage de plus de 20 à 50,
d) un indice de polydispersité rhéologique défini comme $10^5$/Gc, Gc étant le module de croisement d'une rhéologie dynamique selon ISO 6271-10 à 190°C dans la plage de plus de 0,57 à 2,0 $Pa^{-1}$ et
e) un indice de rhéofluidification $SHI_{0/50}$ mesuré comme décrit dans la partie expérimentale dans la plage de 1,80 à 10,0.

**2.** Copolymère de polyéthylène multimodal (P) catalysé par un métallocène selon la revendication 1, dans lequel le composant polymère d'éthylène (A) est constitué d'une fraction de polymère d'éthylène (A-1) et d'une fraction de polymère d'éthylène (A-2),

dans lequel les fractions de polymère d'éthylène (A-1) et (A-2) ont une densité dans la plage de 920 à 960 kg/$m^3$, préférentiellement de 925 à 955 kg/$m^3$ et plus préférentiellement de 930 à 950 kg/$m^3$, encore plus préférentiellement de 935 à 945 kg/$m^3$ et un $MFR_2$, déterminé à 190°C, 2.16 kg, selon ISO 1133, dans la plage de 0,5 à 100,0 g/10 min, préférentiellement de 1,0 à 50,0 g/10 min, plus préférentiellement de 1,5 à 30,0 g/10 min, encore plus préférentiellement de 2,0 à 15,0 g/10 min, et même encore plus préférentiellement de 2,5 à 10,0 g/10 min, et
dans lequel le $MFR_2$ des fractions de polymère d'éthylène (A-1) et (A-2) peut être identique ou différent l'un de l'autre, préférentiellement le $MFR_2$ des fractions de polymère d'éthylène (A-1) et (A-2) est différent l'un de l'autre, plus préférentiellement la fraction de polymère d'éthylène (A-2) a un $MFR_2$ plus élevé que la fraction de polymère d'éthylène (A-1) ; et
dans lequel la densité de la fraction de polymère (A-2) peut être la même que celle de la fraction de polymère (A-1) ou peut être différente de la densité de la fraction de polymère (A-1).

**3.** Copolymère multimodal (P) catalysé par un métallocène selon la revendication 1 ou 2, dans lequel

- le composant polymère d'éthylène (A) a un $MFR_2$ de 2,0 à 15 g/10 min, préférentiellement de 3,0 à 10 g/10 min et plus préférentiellement de 4,0 à 8,0 g/10 min et
- le composant polymère d'éthylène (B) a un $MFR_2$ de 0,1 à 1,2 g/10 min, préférentiellement de 0,2 à 1,0 g/10 min et plus préférentiellement de 0,3 à 1,0 g/10 min et/ou

le $MFR_2$ du copolymère multimodal (P) est dans la plage de 0,8 à 8,0 g/10 min, préférentiellement de 1,0 à 5,0 g/10 min et plus préférentiellement de 1,2 á 3,0 g/10 min.

**4.** Copolymère multimodal (P) catalysé par un métallocène selon l'une quelconque des revendications précédentes, dans lequel le rapport de $MFR_{21}/MFR_2$ est de 21 à 40, préférentiellement de 25 à 35.

**5.** Copolymère multimodal (P) catalysé par un métallocène selon l'une quelconque des revendications précédentes, dans lequel la quantité totale de 1-butène, par rapport au polymère multimodal (P), est dans la plage de 0,1 à 1,5 % en poids, préférentiellement de 0,2 à 1,2 % en poids et plus préférentiellement de 0,3 à 1,0 % en poids,
la quantité totale de 1-hexène, par rapport au polymère multimodal (P), est dans la plage de 2,0 à 20,0 % en poids, préférentiellement de 4,0 à 15,0 % en poids et plus préférentiellement de 5,0 à 12,0 % en poids, et la quantité de

comonomère étant déterminée comme décrit dans la partie expérimentale.

6. Copolymère multimodal (P) catalysé par un métallocène selon l'une quelconque des revendications précédentes, dans lequel la quantité totale (% en poids) de 1-butène présente dans le composant polymère d'éthylène (A) est dans la plage de 0,5 à 5,0 % en poids, préférentiellement de 0,8 à 4,0 % en poids, plus préférentiellement de 1,0 à 3,0 % en poids, encore plus préférentiellement de 1,0 à 2,5 % en poids, par rapport au composant polymère d'éthylène-1-butène (A),
la quantité totale (% en poids) de 1-hexène présente dans le composant polymère d'éthylène (B) est dans la plage de 8,0 à 25,0 % en poids, préférentiellement de 10,0 à 22,0 % en poids, plus préférentiellement de 12,0 à 20,0 % en poids, par rapport au composant polymère d'éthylène-1-hexène (B), et la quantité de comonomère étant déterminée comme décrit dans la partie expérimentale.

7. Copolymère multimodal (P) catalysé par un métallocène selon l'une quelconque des revendications précédentes, dans lequel l'indice de polydispersité rhéologique défini comme $10^5$/Gc, Gc étant le module de croisement d'une rhéologie dynamique selon ISO 6271-10 à 190°C, est dans la plage de 0,60 à 1,5 $Pa^{-1}$, préférentiellement dans la plage de 0,62 à 1,2 $Pa^{-1}$ et/ou
l'indice de rhéofluidification $SHI_{0/50}$ mesuré comme décrit dans la partie expérimentale est dans la plage de 2,00 à 8,0, préférentiellement de 2,5 à 5,0.

8. Copolymère multimodal (P) catalysé par un métallocène selon l'une quelconque des revendications précédentes, dans lequel le copolymère multimodal (P) catalysé par un métallocène peut être **caractérisé en outre par** un indice de rhéofluidification $SHI_{1/100}$ mesuré comme décrit dans la partie expérimentale dans la plage de plus de 2,2 à 10,0, préférentiellement dans la plage de 2,5 à 8,0, plus préférentiellement dans la plage de 3,0 à 5,0.

9. Copolymère multimodal (P) catalysé par un métallocène selon l'une quelconque des revendications précédentes, dans lequel le copolymère multimodal (P) est produit en présence d'un complexe de métallocène de formule (II) :

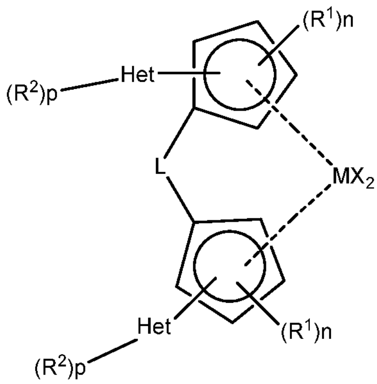

(II)

dans lequel chaque X est indépendamment un atome d'halogène, un groupe $C_{1-6}$-alkyle, un groupe $C_{1-6}$-alkoxy, un groupe phényle ou benzyle ;
chaque Het est indépendamment un groupe hétéroaromatique monocyclique contenant au moins un hétéroatome choisi parmi O ou 5 ;
L est -$R'_2$Si-, chaque R' étant indépendamment $C_{1-20}$-hydrocarbyle ou $C_{1-10}$-alkyle substitué par un alcoxy ayant de 1 à 10 atomes de carbone ;
M est Ti, Zr ou Hf ;
chaque $R_1$ est identique ou différent et est un groupe $C_{1-6}$-alkyle ou un groupe $C_{1-6}$-alcoxy ;
chaque n est de 1 à 2 ;
chaque $R^2$ est identique ou différent et est un groupe $C_{1-6}$-alkyle, un groupe $C_{1-6}$-alcoxy ou un groupe -Si(R)$_3$ ;
chaque R est un groupe $C_{1-10}$-alkyle ou phényle éventuellement substitué par 1 à 3 groupes $C_{1-6}$-alkyle ; et
chaque p est de 0 à 1.

10. Film soufflé comprenant un copolymère multimodal (P) catalysé par un métallocène selon l'une quelconque des revendications précédentes 1 à 9.

11. Film selon la revendication 10, dans lequel le film est **caractérisé par** une température d'initiation du scellage

déterminée comme décrit dans la partie expérimentale sur un film soufflé d'une épaisseur de 40 μm inférieure à 97°C, préférentiellement dans la plage de 60 à 96°C, plus préférentiellement dans la plage de 70 á 95°C et encore plus préférentiellement dans la plage de 80 à 94°C.

**12.** Film selon la revendication 10, dans lequel le film est **caractérisé par** une résistance à testeur d'impact falling dart (DDI) déterminée selon ASTM D1709, méthode A, sur un film soufflé d'essai monocouche de 40 μm d'au moins 500 g à 1200 g, préférentiellement de 600 g à 1000 g et plus préférentiellement de 700 g à plus de 900 g.

**13.** Film selon la revendication 10, dans lequel le film est **caractérisé en ce qu'**il comprend au moins

a) une température d'initiation du scellage déterminée comme décrit dans la partie expérimentale sur un film soufflé d'une épaisseur de 40 μm inférieure à 97°C, préférentiellement dans la plage de 60 à 96°C, plus préférentiellement dans la plage de 70 à 95°C et encore plus préférentiellement dans la plage de 80 à 94°C, et
b) une résistance à testeur d'impact falling dart (DDI) déterminée selon ASTM D1709, méthode A, sur un film soufflé d'essai monocouche de 40 μm d'au moins 500 g à 1200 g, préférentiellement de 600 g à 1000 g et plus préférentiellement de 700 g à plus de 900 g.

**14.** Film selon l'une quelconque des revendications 10 à 13, dans lequel les films ont un module de traction, mesuré sur un film soufflé d'essai monocouche de 40 μm selon ISO 527-3, dans la direction machine (MD) ainsi que dans la direction transversale (TD) dans la plage de > 150 MPa à 400 MPa, préférentiellement de 200 MPa à 350 MPa.

**15.** Utilisation d'un film selon l'une quelconque des revendications précédentes 10 à 14 comme matériau d'emballage, en particulier comme matériau d'emballage pour des produits alimentaires et/ou médicaux.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016083208 A1
- WO 2020109563 A1
- US 2014194277 A1
- WO 2016198273 A
- WO 2021009189 A
- WO 2021009190 A
- WO 2021009191 A
- WO 2021009192 A


### Non-patent literature cited in the description


- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **CASTIGNOLLES, P. ; GRAF, R. ; PARKINSON, M. ; WILHELM, M. ; GABORIEAU, M.** *Polymer,* 2009, vol. 50, 2373
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L. ; FAIT, A. ; PIEMONTESI, F.** *Chem. Rev.,* 2000, vol. 100, 1253
- **HEINO, E.L. ; LEHTINEN, A. ; TANNER J. ; SEPPÄLÄ, J. ; NESTE OY ; PORVOO.** Rheological characterization of polyethylene fractions. *Finland, Theor. Appl. Rheol., Proc. Int. Congr. Rheol, 11th,* 1992, vol. 1, 360-362
- **HEINO, E.L. ; BOREALIS POLYMERS OY ; PORVOO.** he influence of molecular structure on some rheological properties of polyethylene. *Finland, Annual Transactions of the Nordic Rheology Society,* 1995
- Definition of terms relating to the non-ultimate mechanical properties of polymers. *Pure & Appl. Chem.,* 1998, vol. 70 (3), 701-754